# EUROPEAN PATENT SPECIFICATION

(11) **EP 1 489 548 B1**
(45) Date of publication and mention of the grant of the patent: **19.09.2007**
(21) Application number: 04252875.2
(22) Date of filing: 18.05.2004
(51) Int. Cl.: G06K 7/00, G06K 13/08

(54) **Card connector**
Kartensteckverbinder
Connecteur pour carte

(30) Priority: 17.06.2003 JP 2003172199
(43) Date of publication of application: 22.12.2004
(73) Proprietor: Tyco Electronics AMP K.K., Kawasaki-shi, Kanagawa 213-8535 (JP)
(72) Inventor: Hashimoto, Shinichi, Kawasaki-shi Kanagawa-ken 213-8535 (JP); Toda, Shinsaku, Kawasaki-shi Kanagawa-ken 213-8535 (JP)
(74) Representative: Johnstone, Douglas Ian

(56) References cited:
- EP-A- 1 174 956
- US-A- 6 059 589
- PATENT ABSTRACTS OF JAPAN vol. 2003, no. 03, 5 May 2003 (2003-05-05) & JP 2002 324623 A (HIROSE ELECTRIC CO LTD), 8 November 2002 (2002-11-08) & US 2002/160639 A1 (EZAKI MASAKAZU) 31 October 2002 (2002-10-31)

## Description

The present invention relates to a card connector which has an ejection mechanism that allows a so-called "push-push" operation.

Card connectors have been developed which have an ejection mechanism that allows a so-called "push-push" operation, these connectors being devised so that the operating part is not caused to protrude when a card such as a memory card is inserted into the connector or when no card is inserted into the connector, but is rather caused to protrude only when a card that has been inserted into the connector is to be ejected from the connector.

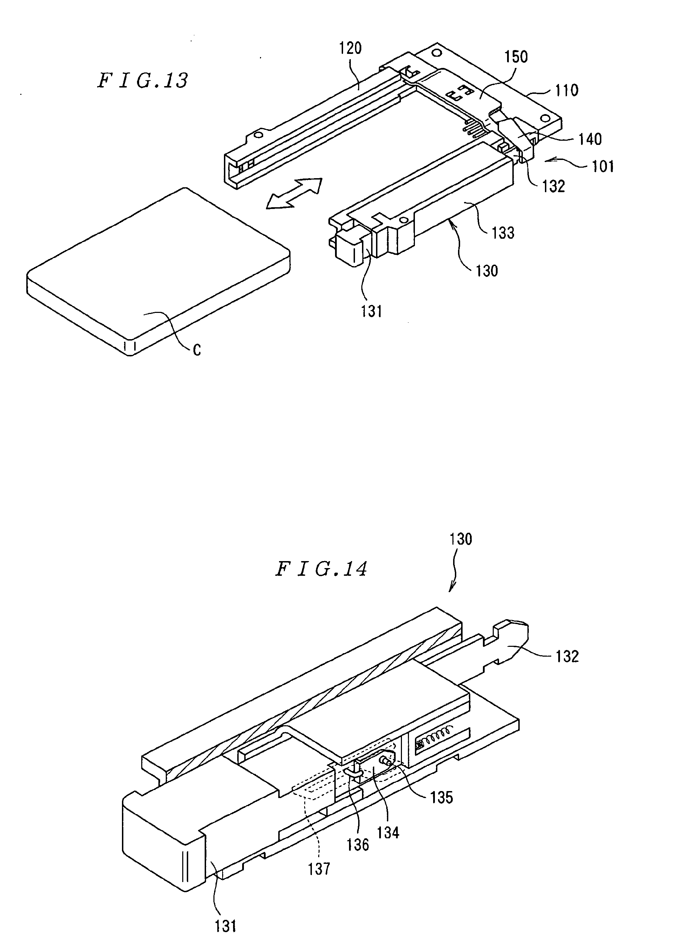

Conventionally, for example, the connector shown in Figs. 13 and 14 is a known card connector which has an ejection mechanism of this type (see Japanese Laid-Open Patent Application No. H 11-219756).

This card connector 101 comprises a connector part 110, a frame body 120 which guides a card C so that this card can be inserted or removed, a push-push type ejection mechanism 130 which is disposed on the side of the frame body 120, a separating lever 140 which pivots as a result of receiving a pressing force from the push rod of the ejection mechanism 130, and a frame 150 which ejects the inserted card C when the separating lever 140 pivots.

Here, the push rod has a first rod 131 that receives a pressing force from the operator and a second rod 132 that transmits this pressing force to the separating lever 140, and the first rod 131 and second rod 132 are engaged via an intermediate member 134. The intermediate member 134 is shaft-supported on the first rod 131 by a spring 136 so that this member 134 can pivot; This intermediate member 134 pivots between a position in which the member 134 is engaged with the second rod 132 and a position in which this engagement is released. The pivoting of the intermediate member 134 is accomplished by an arrangement in which one end 135 of the spring 136 which is attached to the intermediate member 134 engages with a heart cam groove 137 formed in a cover member 133, and the heart cam groove 137 is caused to perform a cyclic motion accompanying the reciprocating motion of the first rod 131.

However, in this card connector 101 shown in Figs. 13 and 14, the following problem arises: namely, since a heart cam structure is employed and the ejection mechanism 130 is large in the direction of width, the card connector 101 as a whole cannot be made compact.

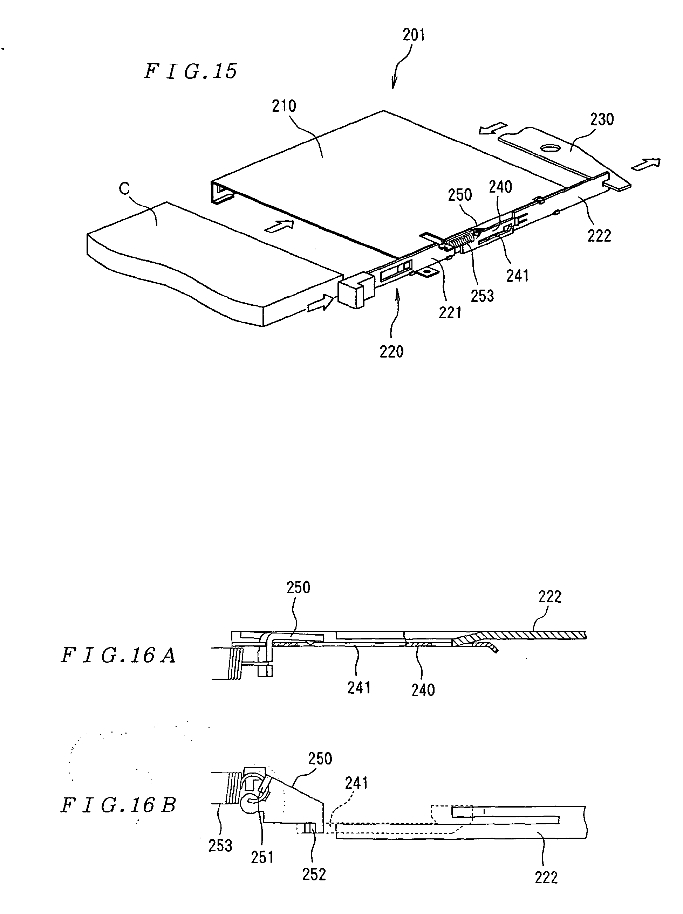

In order to solve this problem, for example, the connector shown in Figs. 15, 16(A) and 16(B) has been proposed as a card connector which has a so-called push-push type ejection mechanism (see Japanese Laid-Open Patent Application No. 2002-324623).

This card connector 201 comprises a frame 210 which guides a card C so that this card can be inserted or removed, a push-push type ejection mechanism 220 which is disposed on the side of the frame 210, and an ejection lever 230 which pivots as a result of receiving a pressing force from the push rod of the ejection mechanism 220, and ejects the inserted card C.

Here, the push rod has a first rod 221 which receives a pressing force from the operator and a second rod 222 which transmits this pressing force to the ejection lever 230. A cam member 250 which engages with a guide groove 241 formed in a guide plate 240 is disposed on the tip end of the first rod 221 that faces the second rod 222, and the first rod 221 and second rod 222 are connected via the cam member 250 during the ejection of the card C.

Thus, since the push rod which drives the ejection lever 230 that is used to eject the card C is constructed from a first rod 221 and a second rod 222, and both rods 221 and 222 are actuated via a cam member 250, and since the guide plate 240 which has the guide groove 241 with which the cam member 250 engages is formed in the form of a plate, the width dimension of the card connector 201 can be reduced, so that the card connector 201 as a whole can be made compact.

However, the following problems have been encountered in the card connector 201 shown in Figs. 15, 16(A) and 16(B).

Specifically, since a high degree of precision is required in the forming of the cam member 250, the manufacture of the cam member 250 is not easy. Furthermore, in the attachment of the cam member 250 to the card connector 201, a spring member 253 must be attached to a hook part 251 on the cam member 250, and an engaging part 252 on the cam member 250 must be engaged with the guide groove 241 from the inside of the guide plate 240, so the assembly of the cam member 250 with the card connector 201 is not easy.

United States patent 6059589 discloses another construction of card connector having a card ejection mechanism. This card connector provides for the selective performance of a card ejecting operation and a misoperation canceling procedure. It has a frame for guiding a card at insertion and extraction and provided with a circulation cam groove and a clearance grove with which a transmission pin pivotally supported by a pushrod is selectively engaged. By pushing the pushed after projecting it to a first position, a drive plate that is placed in the circulation cam groove is pushrod via the second transmission pin, thereby ejecting the card. When a misoperation occurs, the transmission pin is caused to trace the clearance groove, by pulling the pushrod frontward and then pushing it, thereby canceling a card ejecting operation. Furthermore, a handle of the pushrod is provided with a heartshaped cam grove with which a second transmission pin pivotally supported on the frame is engaged. The pushrod can be held in a predetermined retracted position by retaining the second transmission pin at a predetermined position of the heart-shaped cam grove.

The present invention was devised in the light of the problems described above. An object of the present invention is to provide a card connector having an ejection mechanism which makes it possible to reduce the width dimension without using a heart cam structure in the ejection mechanism, and which allows a so-called push-push operation without any need for a swinging cam member.

The invention resides in a card connector as set forth in Claim 1 hereof.

In this card connector, prior to the insertion of the card, the second bar is positioned in a forward position, while the first bar is prevented from retracting rearward by the engaging arm being engaged with the stopper of the frame. When a card is inserted while-this first bar is locked, the pivoting arm is pressed by the insertion of the card so that this pivoting arm pivots. As a result, the second bar is caused to retract rearward via the second engaging part. When the first bar is locked, the engaging arm of the first bar is caused to flex outward with respect to the frame by the tapered surface of the stopper. Accordingly, the passage of the first engaging part of the second bar between the frame and engaging arm is allowed. Furthermore, when the card is to be ejected, the operating part of the first bar is pressed so that this bar is caused to advance forward, thus releasing the locking of the first bar. When the locking of this first bar is to be released, the first bar is caused to flex upward by the tapered part. The engaging arm that has been caused to flex upwardly by the tapered part engages with the side edge of the guide part of the second bar, and when the pressing operation of the first bar is stopped, the first bar is caused to retract rearwardly by the action of the forcing means that forces the first bar rearward. Accordingly, the engaging arm passes by the side of the stopper while moving along the side edge of the guide part, so that the locking is released. In this case, the operating part of the first bar protrudes into the card ejection operating position. Then, when this protruding operating part of the first bar is pressed so that the first bar is caused to advance forwardly, the engaging arm of the first bar engages with the first engaging part of the second bar, so that the second bar advances forwardly. As a result, the pivoting arm is caused to pivot via the second engaging part of the second bar, so that the card is ejected in the ejection direction. The engaging arm of the first bar advances forward until the second bar is positioned in the position of furthest forward advance; however, when the pressing operation is stopped in this state of forward advance, the first bar is caused to retract rearwardly by the forcing means, and the engaging arm is engaged with the stopper of the frame, so that rearward retraction is prevented.

A second tapered part may be formed on the cover member and be arranged to force inward movement of the engaging arm, that is caused to flex outward by the tapered surface of the stopper, when the locking of the first bar is released. With this arrangement, the engaging arm that is caused to flex outward by the tapered surface of the stopper, when the locking of the first bar is released, is securely forced inwardly by the second tapered part of the cover member.

A supporting part may be disposed on the first bar so as to clamp the guide part together with the engaging arm when the locking of the first bar is released. With this arrangement, when the locking of the first bar is released, the engaging arm, that is caused to flex upward by the tapered part, engages with the side edge of the guide part of the second bar, and the supporting part enters the space beneath the guide part, so that the guide part is clamped by the engaging arm and supporting part. Then, when the pressing operation of the first bar is stopped, the first bar is caused to retract rearwardly by the action of the forcing means that forces the first bar rearwardly. In this case, the guide part clamped by the engaging arm and supporting part retracts rearwardly to the vicinity of the stopper, and the engaging arm passes over the stopper while moving along the guide part, so that the locking is released.

An inclined guide surface may be formed on the first engaging part of the second bar and guides the rearward retraction of the engaging arm when the locking of the first bar is released. When the locking of the first bar is to be released, the rearward retraction of the engaging arm is guided by the inclined guide surface, so that the locking is released.

An elastic locking member may be disposed on the cover member and this prevents the forward advance of the second bar when the locking of the first bar is released. Hence, when the locking of the first bar is released, the forward advance of the second bar is prevented by the elastic locking member.

The invention will now be described by way of example only with reference to the accompanying drawings in which:
Figs. 1(A) to 1(C) show the card connector of the present invention, with Fig. 1 (A) showing a back view, Fig. 1 (B) showing a plan view, and Fig. 1 (C) showing a front view;
Figs. 2(A) and 2(B) show the card connector shown in Figs. 1 (A) to 1 (C), with Fig. 2 (A) showing a right-side view and Fig. 2 (B) showing a left-side view;
Figs. 3(A) to 3(C) show the assembled state of the frame and ejection mechanism, with Fig. 3 (A) showing a plan view, Fig. 3 (B) showing a front view, and Fig. 3 (C) showing a left-side view;
Figs. 4(A) to 4(C) show the frame, with Fig. 4 (A) showing a plan view, Fig. 4 (B) showing a front view, and Fig. 4 (C) showing a left-side view;
Figs. 5(A) and 5(B) show the first bar, with Fig. 5 (A) showing a plan view and Fig. 5 (B) showing a left-side view;
Figs. 6(A) and 6(B) show the second bar, with Fig. 6 (A) showing a plan view and Fig. 6 (B) showing a left-side view;
Figs. 7(A) to 7(D) show the cover member, with Fig. 7 (A) showing a plan view, Fig. 7 (B) showing a left-side view, Fig. 7 (C) showing a bottom view, and Fig. 7 (D) showing a front view;
Figs. 8(A) to 8(E) show the operation of the ejection mechanism in a state in which the cover member is attached, with Fig. 8 (A) showing the state prior to the insertion of the card, Fig. 8 (B) showing the state following the insertion of the card, Fig. 8 (C) showing the state during the release of the locking of the first bar, Fig. 8 (D) showing a state in which the locking of the first bar has been released, and the eject button is protruding in the ejection operating position, and Fig. 8 (E) showing a state in which the card has been ejected;
Figs. 9(A) to 9(E) show the operation of the ejection mechanism in a state in which the cover member has been removed, with Fig. 9 (A) showing the state prior to the insertion of the card, Fig. 9 (B) showing the state following the insertion of the card, Fig. 9 (C) showing the state during the release of the locking of the first bar, Fig. 9 (D) showing a state in which the locking of the first bar has been released, and the eject button is protruding in the ejection operating position, and Fig. 9 (E) showing a state in which the card has been ejected;
Figs. 10(A) and 10(B) show the locking operation of the first bar, with Fig. 10 (A) showing a plan view, and Fig. 10 (B) showing a left-side view;
Figs. 11(A) and 11 (B) show the first stage of the release of the locking of the first bar, with Fig. 11 (A) showing a plan view, and Fig. 11 (B) showing a left-side view;
Fig. 12 is a left-side view showing the second stage of the release of the locking of the first bar;
Fig. 13 is a perspective view of a conventional example of a card connector which has a push-push type ejection mechanism;
Fig. 14 is a sectional perspective view of the main parts of the ejection mechanism of the card connector shown in Fig. 13;
Fig. 15 is a perspective view of another conventional example of a card connector which has a push-push type ejection mechanism; and
Figs. 16(A) and 16(B) show the main parts of the ejection mechanism of the card connector shown in Fig. 15, with Fig. 16 (A) showing a plan view, and Fig. 16 (B) showing a side view.

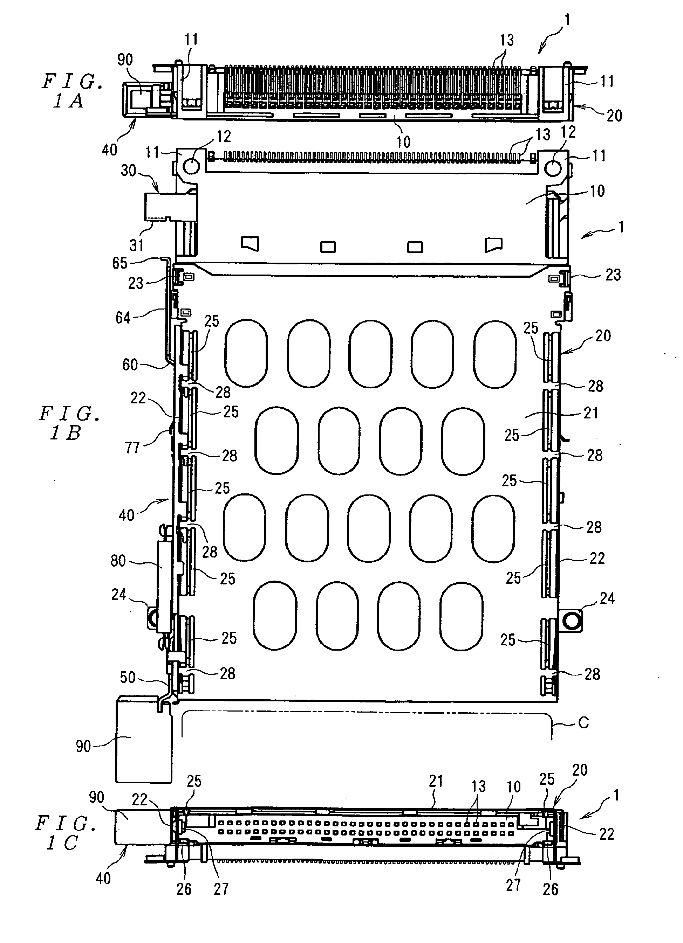

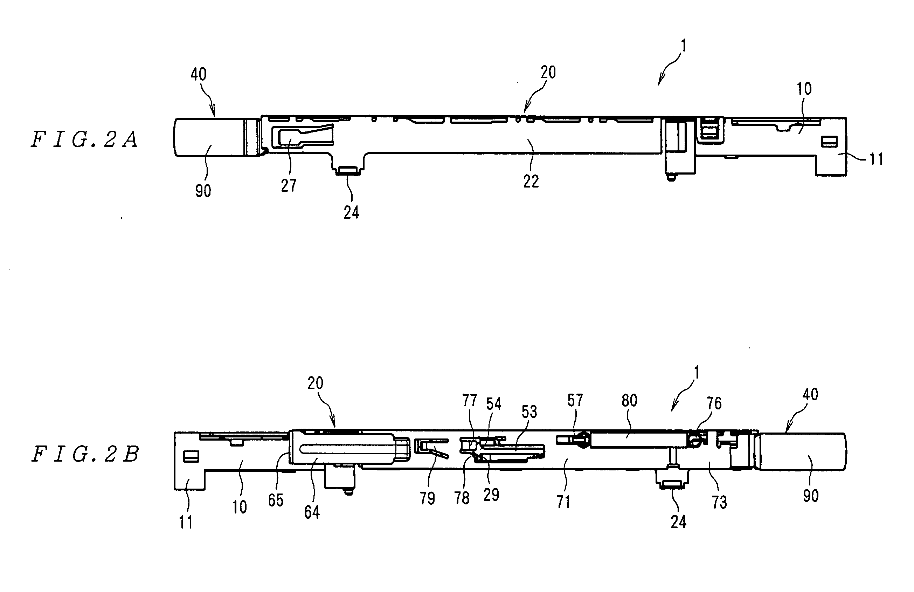

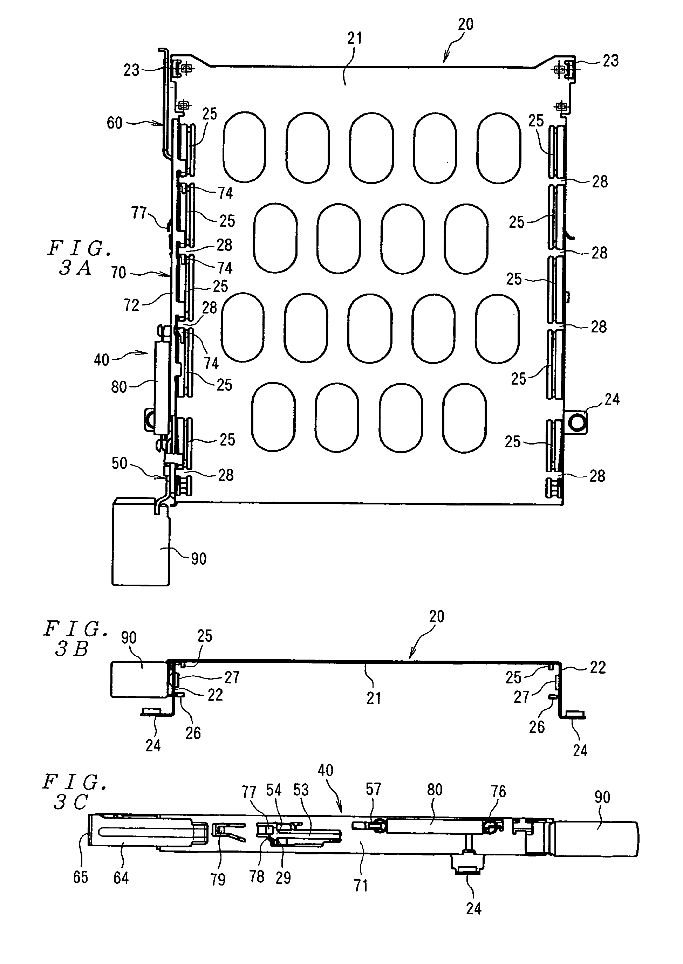

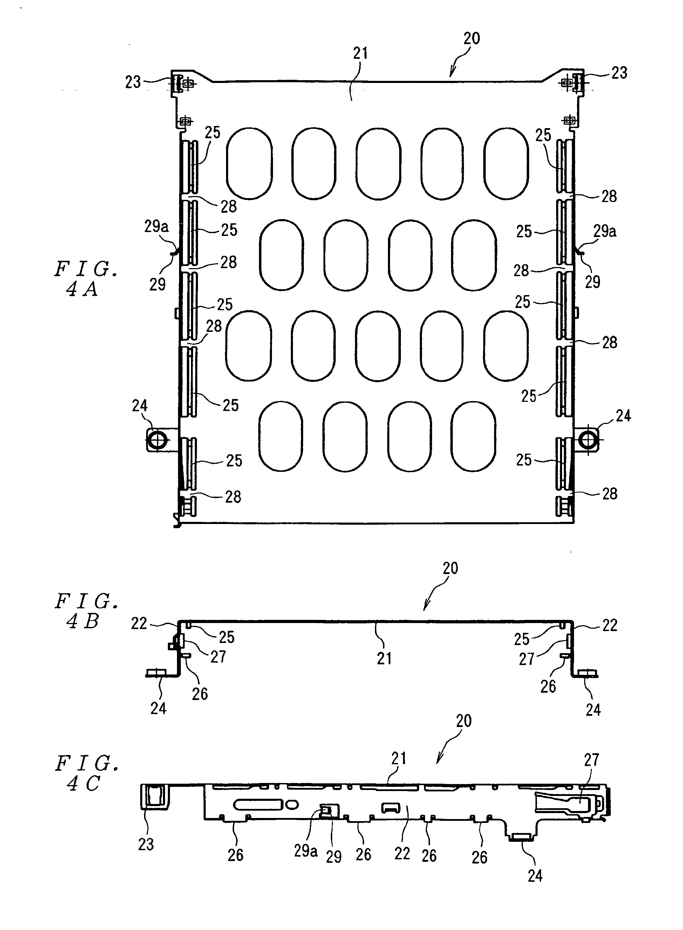

In Figs. 1(A) to 1 (C), 2(A) and 2(B), the card connector 1 comprises a housing 10, a frame 20, a pivoting arm 30, and an ejection mechanism 40.

The housing 10 is constructed from a substantially rectangular-solid-form body that extends in the direction of length (i.e., the left-right direction in Fig. 1 (B)); this housing 10 is formed by molding an insulating resin. Board mounting parts 11 for mounting the card connector on a circuit board (not shown in the figures) are disposed on both ends of the housing 10 in the direction of length, and through-holes 12 used for attachment screws are formed in the respective board mounting parts 11. Furthermore, a plurality of contacts 13 are held in the housing 10 along the direction of length. The respective contacts 13 are formed by stamping and forming metal plates; these contacts 13 are connected by soldering to the circuit board, and are engaged with and caused to contact a card C such as a memory card which is inserted into the card connector 1. Furthermore, the pivoting arm 30 is disposed inside the housing 10 so that this pivoting arm 30 can pivot; this pivoting arm comprises a card engaging part (not shown in the figures) that engages with the inserted card C on one end (inside the housing 10), and a bar engaging part 31 that engages with the bent part 65 of the second engaging part 64 of a second bar 60 (described later) on the other end (outside the housing 10). By pivoting, the pivoting arm 30 ejects the inserted card C in the ejection direction (the downward direction in Fig. 1 (B)).

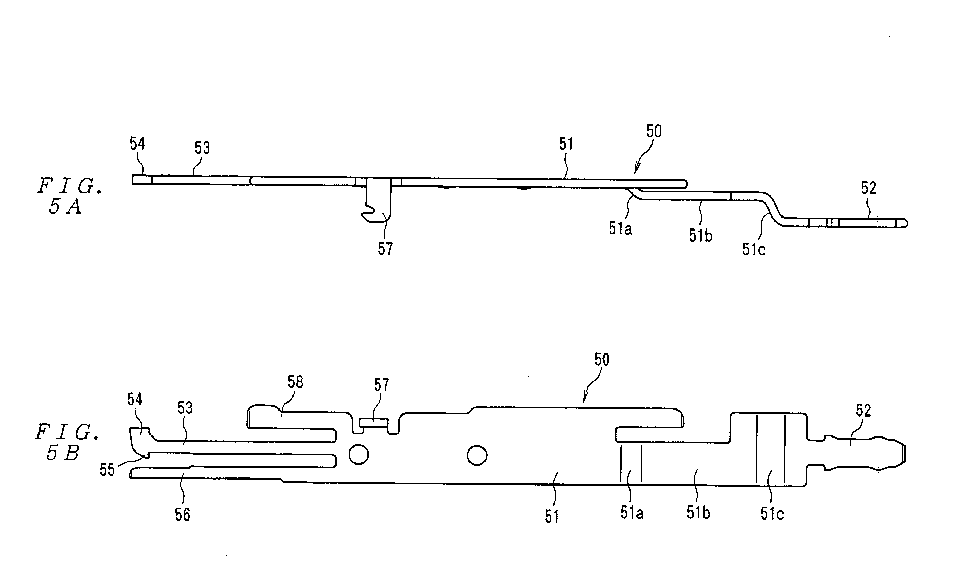

The frame 20 shown in Figs. 3 (A) to 4(C) comprises a rectangular flat-plate part 21, and a pair of side wall parts 22 that are bent downward from both ends of the flat-plate part 21 in the direction of width (both ends in the left-right direction in Fig. 1 (B)). This frame 20 is formed by stamping and forming a metal plate. Fastening parts 23 which are fastened by press-fitting to both end parts of the housing 10 in the direction of length are formed by being bent downwardly on the front portions (upper portions in Fig. 1 (B)) of both ends of the flat-plate part 21 in the direction of width. Furthermore, mounting parts 24 used for mounting on the circuit board are formed by being bent on the rear portions of the respective side wall parts 22. Moreover, a plurality of guide projection parts 25 that protrude downwardly from the flat-plate part 21 are formed on both ends of the flat-plate part 21 in the direction of width, in positions located to the inside of the side wall parts 22. The respective guide projection parts 25 are connected to the upper ends of the side wall parts 22 by connecting parts 28. Furthermore, a plurality of bent parts 26 are formed by being bent from the lower ends of the respective side wall parts 22. When a card C is inserted or removed, the movement of the card C in the vertical direction is regulated by the guide projection parts 25 and bent parts 26; furthermore, the movement of the card C in the left-right direction (direction of length of the housing 10) is regulated by the pair of side wall parts 22, so that the card C is guided in a manner that allows insertion or removal. Furthermore, ground parts 27 that contact the side parts of the inserted card C are formed by being bent inward on the rear portions of the respective side wall parts 22. Moreover, cut-and-raised stoppers 29 are formed on substantially the central portions of the respective side wall parts 22 in the forward-rearward direction. The stoppers 29 have tapered surfaces 29a that perform a locking action by engaging with the engaging arm 53 of a first bar 50 (described later) so that rearward retraction of the first bar 50 is prevented.

Furthermore, the ejection mechanism 40 is disposed on the side of the frame 20, and comprises a first bar 50, a second bar 60 and a cover member 70. The first bar 50 and second bar 60 are disposed in a single row along one side wall part 22 of the frame 20 (on the outside of this side wall part 22), with the first bar 50 on the rear side and the second bar 60 on the front side. Furthermore, the first bar 50 and second bar 60 are supported by the cover member 70, which is attached to the frame 20 so that these bars can move in the forward-rearward direction.

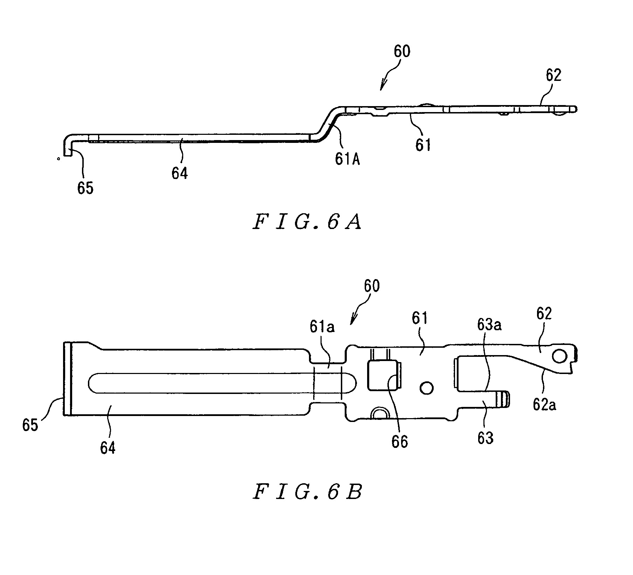

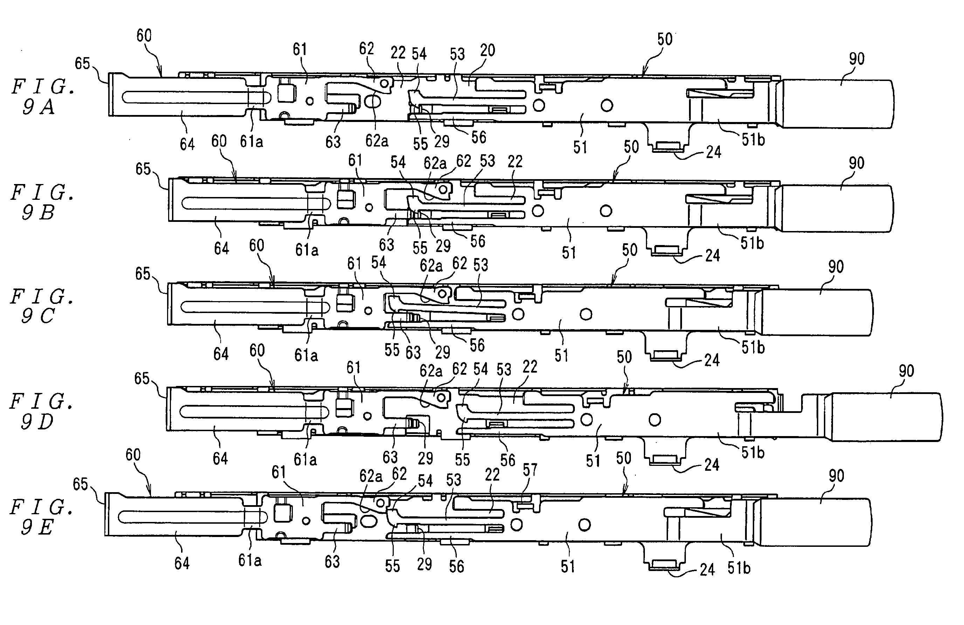

The first bar 50 shown in Figs. 5(A) and 5(B) has a main body part 51 which extends in the forward-rearward direction along the side wall part 22 of the frame 20. This first bar 50 is formed by stamping and forming a metal plate. As is shown in Figs. 5(A) and 5(B), a button fastening part 52 which protrudes rearward via a first inclined part 51a that is inclined outward from the main body part 51, a flat-plate part 51 b that extends rearward from the first inclined part 51a, and a second inclined part 51c that is inclined outward from the flat-plate part 51b, is formed on the rear end of the main body part 51. The eject button (operating part) 90 shown in Figs. 1(A) to 1(C) and 3(A) to 3(C) is fastened by press-fitting to this button fastening part 52. Furthermore, an engaging arm 53 that protrudes forward is formed on the front end of the main body part 51. An engaging part 54 that engages with the first engaging part 62 of the second bar 60 when the card C is ejected is disposed on the front end of the engaging arm 53, and a locking part 55 that is anchored and locked by the stopper 29 of the frame 20 is formed so that this locking part 55 protrudes from the lower end of the engaging part 54. When the first bar 50 is to be locked by the locking part 55, the engaging arm 53 is caused to flex outward with respect to the frame 20 by the tapered surface 29a of the stopper 29, so that the first engaging part 62 of the second bar 60 is allowed to pass. Furthermore, a supporting part 56 which clamps the guide part 63 of the second bar 60 together with the locking part 55 formed on the engaging arm 53 when the locking of the first bar 50 is to be released is formed so that this supporting part 56 protrudes forward from the front end of the main body part 51. As a result of this clamping, the guide part 63 (see Fig. 6 (B)) of the second bar 60 is pulled in toward the rear and caused to approach the stopper 29 when the first bar 50 is retracted rearwardly (see Figs. 8 (D) and 9 (D)). Furthermore, an engaging part 57 with which one hook part of a tension spring (forcing means) 80 that forces the first bar 50 rearward is engaged is formed by being bent outward on the upper front end of the main body part 51. The part disposed side by side with the engaging arm 53 is an anti-rattling part 58 which prevents inclination of the first bar 50 by engaging with the guide part 72 of the cover member 70.

Furthermore, the second bar 60 has a main body part 61 that extends in the forward-rearward direction along the side wall part 22 of the frame 20. This second bar 60 is formed by stamping and forming a metal plate. As is shown in Figs. 6(A) and 6(B), a first engaging part 62 with which the engaging part 54 formed on the engaging arm 53 engages when the card C is ejected is formed so that this first engaging part 62 protrudes rearwardly from the rear end of the main body part 61. An inclined guide surface 62a which guides the rearward retraction of the engaging arm 53 when the locking of the first bar 50 is released is formed on the first engaging part 62. Furthermore, a guide part 63 is disposed on the rear end of the main body part 61. The guide part 63 has a side edge 63a that is engaged by the locking part 55 of the engaging arm 53 is caused to flex upward by the first tapered part 78 formed on the cover member 70 (described later) when the locking of the first bar 50 is released. The width of the guide part 63 is greater than the width of the stopper 29 of the frame 20 (see Figs. 9 (C) and 9 (D)). Meanwhile, a second engaging part 64 that protrudes forwardly via an inclined part 61a that is inclined outwardly is formed on the front end of the main body part 61. The front end of the second engaging part 64 is formed as a bent part 65 that is bent outwardly. The bent part 65 engages with the engaging part 31 of the pivoting arm 30. Furthermore, a hole 66 in which the elastic part 79 of the cover member 70 is anchored is formed in the main body part 61 near the second engaging part 64.

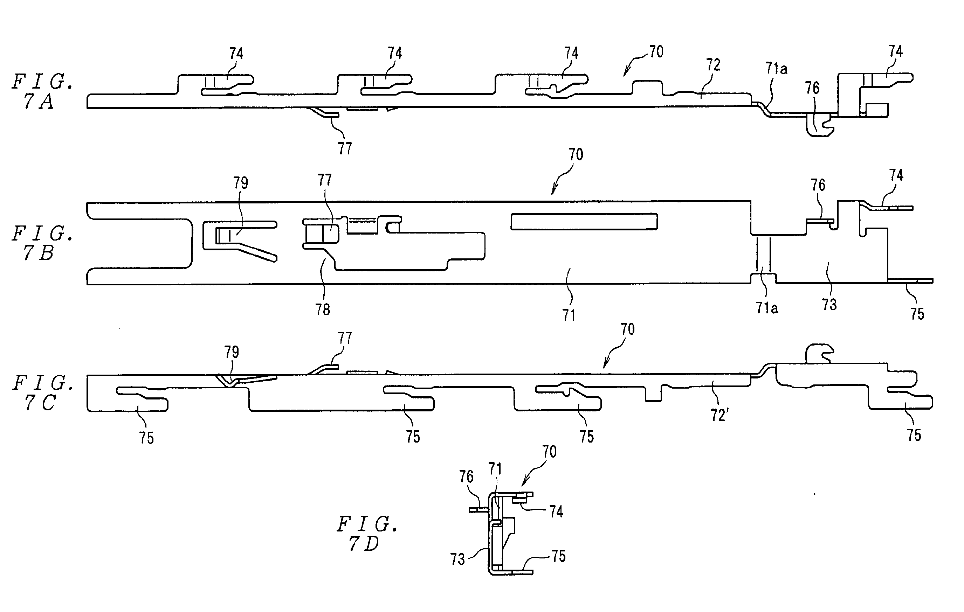

Furthermore, as is shown in Figs. 7(A) to 7(D), the cover member 70 has a main body part 71 that extends in the forward-rearward direction along the side wall part 22 of the frame 20 so that this cover member 71 covers the first bar 50 and second bar 60; this cover member 70 is formed by stamping and forming a metal plate. Guide parts 72 and 72' that regulate the movement of the main body part 51 of the first bar 50 and the main body part 61 of the second bar 60 in the vertical direction are respectively formed by being bent inward on the upper end and lower end of the main body part 71. The first bar 50 and second bar 60 are supported (so that these bars can move in the forward-rearward direction) by being surrounded by the main body part 71 and upper and lower guide parts 72 and 72'. Furthermore, a flat-plate part 73 that extends rearward via an inclined part 71a that is inclined outward is formed on the rear end of the main body part 71. A plurality of anchoring parts 74 that enter the spaces beneath the connecting parts 28 of the frame 20 are disposed on the upper end of the flat-plate part 73 and on the guide part 72 formed on the upper end of the main body part 71, and a plurality of anchoring parts 75 that enter the spaces above the bent parts 26 of the frame 20 are disposed on the lower end of the flat-plate part 73 and on the guide part 72' formed on the lower end of the main body part 71. The cover member 70 is attached to the frame 20 by the anchoring parts 74 and 75. Furthermore, an engaging part 76 with which the other hook part of the tension spring 80 that forces the first bar 50 rearward is engaged is formed by being bent outward on the upper end of the flat-plate part 73. Moreover, a second tapered part 77 is formed on the main body part 71 and applies an inward driving force to the engaging arm 53 as it is caused to flex outward by the tapered surface 29a of the stopper 29 when the locking of the first bar 50 is released. As is shown in Figs. 7(A) to 7(D), the second tapered part 77 is formed so that this part is inclined at an inclination toward the rear from the main body part 71. Furthermore, a first tapered part 78 that causes the engaging arm 53 to flex upward when the locking of the first bar 50 is released is formed on the main body part 71. Moreover, an elastic part (elastic locking member) 79 that prevents the forward advance of the second bar 60 when the locking of the first bar 50 is released is formed on the main body part 71 so that this elastic part 79 protrudes inwardly. The elastic part 79 is anchored in the hole 66 of the second bar 60, and thus prevents the forward advance of the second bar 60 when the locking of the first bar 50 is released.

After the ejection mechanism 40 is attached to the frame 20 as shown in Figs. 3(A) to 3(C), the card connector 1 is completed by attaching this assembly to the housing 10.

Next, the operation of the present invention will be described with reference to Figs. 8(A) to 8(E), 9(A) to 9(E), 10(A) and 10(B), 11 (A) and (B), and 12.

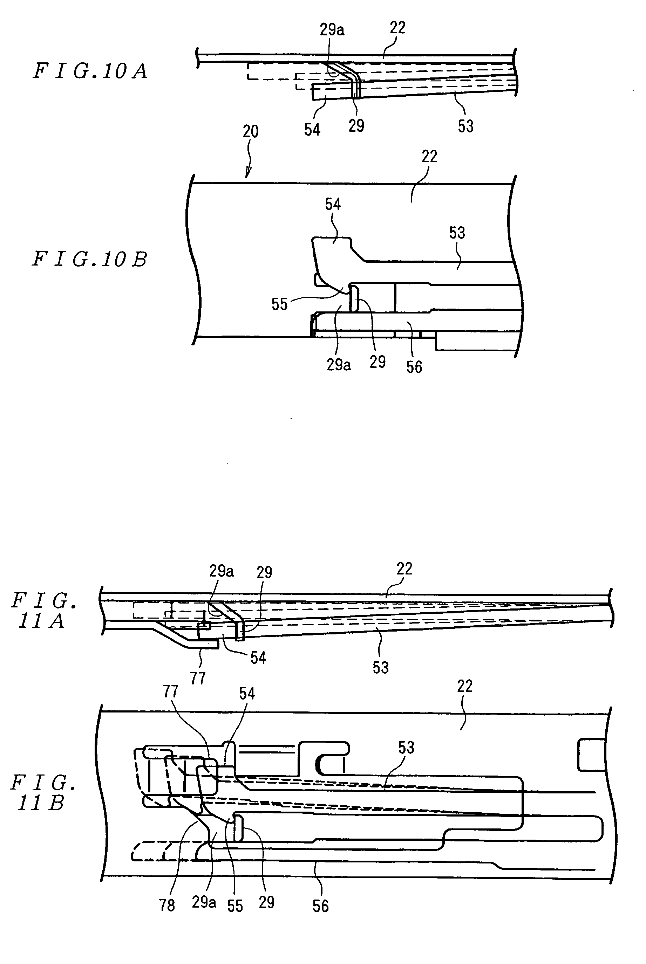

[0034] As is shown in Figs. 8 (A) and 9 (A), the second bar 60 is positioned in a forward position prior to the insertion of the card C. On the other hand, the first bar 50 is prevented from retracting rearwardly by the locking of the locking part 55 on the stopper 29 of the frame 20. When this first bar 50 is locked, the engaging arm 53 of the first bar 50 is caused to flex outwardly with respect to the side wall part 22 of the frame 20 by the tapered surface 29a of the stopper 29 as shown in Figs. 10(A) and 10(B).

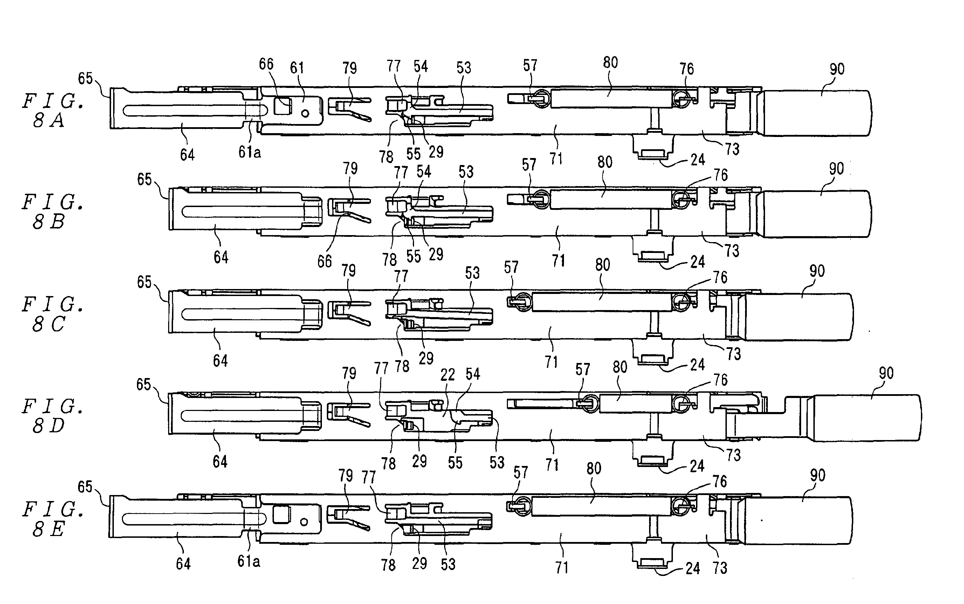

Then, when a card C is inserted while the first bar 50 is locked, the pivoting arm 30 pivots as a result of being pushed by the insertion of the card C, so that the second bar 60 is caused to retract rearwardly via the bent part 65 and second engaging part 64 as shown in Figs. 8 (B) and 9 (B). When the first bar 50 is locked, the engaging arm 53 of the first bar 50 is caused to flex outwardly with respect to the side wall part 22 of the frame 20 by the tapered surface 29a of the stopper 29; accordingly, the passage of the first engaging part 62 of the second bar 60 between the frame side wall part 22 and the engaging part 54 formed on the engaging arm 53 is allowed as shown in Fig. 9 (B).

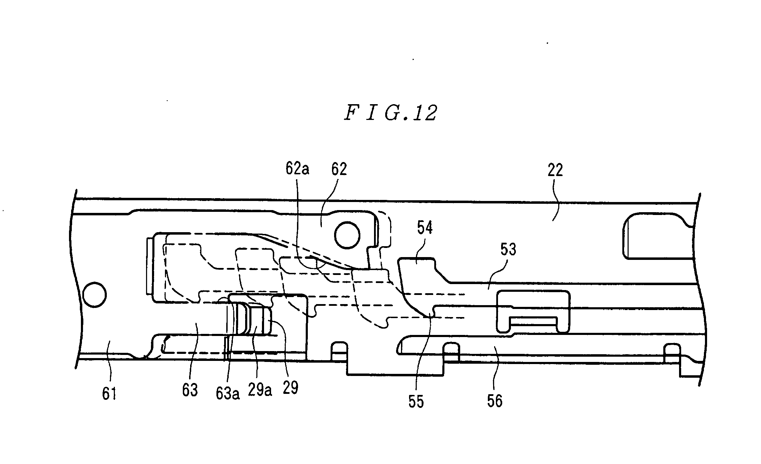

Furthermore, when the card C is to be ejected, the eject button 90 of the first bar 50 is pressed so that the first bar 50 is caused to advance forward, thus releasing the locking of the first bar 50 as shown in Figs. 8 (C) and 9 (C). When the locking of this first bar 50 is to be released, as is shown in Figs. 11(A) and 11 (B), the engaging arm 53 that was caused to flex outward by the tapered surface 29a of the stopper 29 is driven inwardly by the second tapered part 77 of the cover member 70, and is caused to flex upwardly by the first tapered part 78. As is shown in Fig. 12, the locking part 55 of the engaging arm 53 caused to flex upwardly by the first tapered part 78 engages with the side edge 63a of the guide part 63 of the second bar 60, which is wider than the stopper 29. Furthermore, the supporting part 56 of the first bar 50 enters the space beneath the guide part 63 and clamps the guide part 63 of the second bar 60 together with the locking part 55 formed on the engaging arm 53. When the locking of this first bar 50 is released, the elastic part 79 formed on the cover member 70 is anchored in the hole 66 of the second bar 60, thus preventing the forward advance of the second bar 60. If a state in which the card C is slightly removed from this position should be created for some reason following the insertion of the card C, there is a danger that the second bar 60 will advance forwardly when the eject button 90 is pressed. If the second bar 60 advances forwardly, the supporting part 56 and locking part 55 cannot clamp the guide part 63, so that the guide part 63 and stopper 29 cannot be caused to approach each other. This means that the locking part 55 will be locked on the stopper 29, so that the eject button 90 does not reach the position shown in Fig. 9 (D). However, this problem can be completely prevented by the anchoring of the elastic part 79 and hole 66.

Then, when the pressing operation of the first bar 50 is stopped, the first bar 50 is caused to retract rearwardly by the action of the tension spring 80 that forces the first bar 50 rearward as shown in Figs. 8 (D) and 9 (D), and the locking part 55 of the engaging arm 53 passes the stopper 29 while moving along the side edge 63a of the guide part 63, so that the locking is released as shown in Fig. 12. In this case, the guide part 63 that is clamped by the locking part 55 of the engaging arm 53 and the supporting part 56 retracts rearward to the vicinity of the stopper 29. At the same time, the engaging arm 53 retracts rearwardly while the engaging part 54 formed on the engaging arm 53 moves along the inclined guide surface 62a of the first engaging part 62, so that the locking is released. Furthermore, the eject button 90 disposed on the first bar 50 protrudes in the ejection operating position for the card C.

Then, when the protruding eject button 90 is pressed and caused to advance as shown in Figs. 8 (E) and 9 (E), the engaging part 54 formed on the engaging arm 53 of the first bar 50 engages with the first engaging part 62 of the second bar 60, so that the second bar 60 advances forwardly. As a result, the pivoting arm 30 is caused to pivot via the second engaging part 64 and the bent part 65 of the second bar 60, so that the card C is ejected in the ejection direction.

Then, when the pressing operation of the first bar 50 is stopped, the first bar 50 is caused to retract rearwardly by the action of the tension spring 80, and returns to its original state shown in Figs. 8 (A) and 9 (A); furthermore, the locking part 55 of the engaging arm 53 is locked on the stopper 29, so that further rearward retraction of the first bar 50 is prevented.

Furthermore, in cases where no card C is inserted into the connector, the second bar 60 is located in the forward position as shown in Figs. 8 (A) and 9 (A). Accordingly, in this state, even if the eject button 90 of the first bar 50 is pressed and caused to advance, the locking of the first bar 50 cannot be released since the locking part 55 of the engaging arm 53 does not engage with the side edge 63a of the guide part 63 of the second bar 60.

As was described above, a card connector 1 can be constructed with an ejection mechanism 40 that allows a so-called "push-push" operation, which is devised so that in cases where a card C has been inserted into the connector, or in cases where no card C has been inserted into the connector, the eject button 90 does not protrude into the ejection operating position, but is rather caused to protrude only when a card C that has been inserted into the connector is to be ejected.

Furthermore, this ejection mechanism 40 does not require a conventional swinging cam member such as that shown in Figs. 16(A) and 16(B); accordingly, a connector can be constructed which is easy to manufacture and also easy to assemble.

Furthermore, a heart cam structure is not used in the ejection mechanism 40; accordingly, the width dimension of the ejection mechanism 40 can be reduced.

An embodiment of the present invention has been described above. However, the present invention is not limited to this embodiment and various alterations or modifications may be made without departing from the scope of the invention as defined by the appended claims.

For example, the first bar 50, second bar 60 and cover member 70 may be made of a synthetic resin instead of metal.

As was described above, the card connector of the present invention can be constructed as a card connector with a push-push type ejection mechanism that allows a so-called push-push operation, in which the width dimension can be reduced since a heart cam structure is not used in the ejection mechanism, and in which there is no need for a swinging cam member.

## Claims

1. A card connector (1) comprising:
a housing (10) which holds contacts (13);
a frame (20) which is attached to this housing (10) and which guides a card (C) so that the card (C) can be inserted or removed;
a pivoting arm (30) which is disposed on the housing (10) so that this arm (30) can pivot and which ejects the card (C) in the ejection direction by pivoting; and
an ejection mechanism (40) which is disposed on the side of the frame (20), and which causes the pivoting arm (30) to pivot when the card (C) is to be ejected, wherein
the ejection mechanism (40) comprises a first bar (50) which has an operating part (90) on one end and an engaging arm (53) on the other end, a second bar (60) which has a first engaging part (62) that can engage with the engaging arm (53) when the card (C) is to be ejected on one end and a second engaging part (64) that engages with the pivoting arm (30) on the other end, and a cover member (70) which supports the first bar (50) and second bar (60) so that these bars (50,60) can move in the forward-rearward direction,
the first bar (50) and second bar (60) being disposed in a single row along a side wall of the frame (20), and forcing means (80) being arranged to force the first bar (50) rearwardly, **characterized in that**
a cut-and-raised stopper (29) which has a tapered surface (29a) and which performs a locking action by engaging with the engaging arm (53) and thus preventing rearward retraction of the first bar (50) is formed on the frame (20), and when the first bar (50) is locked, the engaging arm (53) is caused to flex outward with respect to the frame (20) by the tapered surface (29a) of the stopper (29), so that passage of the first engaging part (62) of the second bar (60) is permitted,
a tapered part (78) which causes the engaging arm to flex upward when the locking of the first bar (50) is released is formed on the cover member (70), and
a guide part (63) which has a side edge (63a) that is engaged by the engaging arm (53) that is caused to flex upward by the tapered part (78) when the locking of the first bar (50) is released is disposed on the second bar (60).

2. The card connector according to Claim 1, wherein a second tapered part (77) is formed on the cover member (70) and forces inward movement of the engaging arm, that is caused to flex outward by the tapered surface of the stopper when the locking of the first bar is released.

3. The card connector according to Claim 1 or Claim 2, wherein a supporting part (56) is disposed on the first bar (50) and clamps the guide part (63) together with the engaging arm (53) when the locking of the first bar (50) is released.

4. The card connector according to any one of Claims 1 through 3, wherein an inclined guide surface is formed on the first engaging part (62) of the second bar (60) and guides the rearward retraction of the engaging arm (53) when the locking of the first bar (50) is released.

5. The card connector according to any one of Claims 1 through 4, wherein an elastic locking member (79) is disposed on the cover member (70) and prevents the forward advance of the second bar (60) when the locking of the first bar (50) is released.

## Patentansprüche

1. Kartenverbinder (1), umfassend:
ein Gehäuse (10), das Kontakte (13) hält;
einen Rahmen (20), der an diesem Gehäuse (10) angebracht ist und der eine Karte (C) führt, so dass die Karte (C) eingesteckt oder abgezogen werden kann;
einen Schwenkarm (30), der am Gehäuse (10) angeordnet ist, so dass dieser Arm (30) geschwenkt werden kann, und der durch Schwenken die Karte (C) in der Auswurfrichtung auswirft; und
einen Auswurfmechanismus (40), der an der Seite des Rahmens (20) angeordnet ist und der verursacht, dass der Schwenkarm (30) geschwenkt wird, wenn die Karte (C) ausgeworfen werden soll, wobei
der Auswurfmechanismus (40) einen ersten Stab (50), der an einem Ende einen Betätigungsteil (90) und am anderen Ende einen Eingriffsarm (53) hat, einen zweiten Stab (60), der an einem Ende einen ersten Eingriffsteil (62) hat, der den Eingriffsarm (53) in Eingriff nehmen kann, wenn die Karte (C) ausgeworfen werden soll, und am anderen Ende einen zweiten Eingriffsteil (64) hat, der mit dem Schwenkarm (30) in Eingriff kommt, und ein Abdeckungselement (70) umfasst, das den ersten Stab (50) und den zweiten Stab (60) trägt, so dass sich diese Stäbe (50, 60) in der Vorwärts-Rückwärts-Richtung bewegen können,
der erste Stab (50) und der zweite Stab (60) einreihig entlang einer Seitenwand des Rahmens (20) angeordnet sind und Druckmittel (80) zum Rückwärtsdrücken des ersten Stabs (50) angeordnet sind,
**dadurch gekennzeichnet, dass**
ein eingeschnittener und erhöhter Anschlag (29), der eine abgeschrägte Fläche (29a) hat und der einen Arretierungsvorgang durchführt, indem er mit dem Eingriffsarm (53) in Eingriff kommt und daher ein Zurückziehen des ersten Stabs (50) nach hinten verhindert, am Rahmen (20) ausgebildet ist und, wenn der erste Stab (50) arretiert wird, von der abgeschrägten Fläche (29a) des Anschlags (29) verursacht wird, dass der Eingriffsarm (53) sich in Bezug auf den Rahmen (20) nach außen biegt, so dass das Passieren des ersten Eingriffsteils (62) des zweiten Stabs (60) zugelassen wird,
ein abgeschrägter Teil (78), der verursacht, dass der Eingriffsarm sich nach oben biegt, wenn die Arretierung des ersten Stabs (50) gelöst wird, am Abdeckungselement (70) ausgebildet ist, und
ein Führungsteil (63), der einen Seitenrand (63a) hat, der mit dem Eingriffsarm (53) in Eingriff kommt, der vom abgeschrägten Teil (78) dazu gebracht wird, sich nach oben zu biegen, wenn der erste Stab (50) gelöst wird, am zweiten Stab (60) angeordnet ist.

2. Kartenverbinder nach Anspruch 1, bei dem ein zweiter abgeschrägter Teil (77) am Abdeckungselement (70) ausgebildet ist und eine Einwärtsbewegung des Eingriffsarms erzwingt, der von der abgeschrägten Fläche des Anschlags zum Biegen nach außen gebracht wird, wenn die Arretierung des ersten Stabs gelöst wird.

3. Kartenverbinder nach Anspruch 1 oder Anspruch 2, bei dem ein Trägerteil (56) am ersten Stab (50) angeordnet ist und das Führungsteil (63) mit dem Eingriffsarm (53) zusammen festspannt, wenn die Arretierung des ersten Stabs (50) gelöst wird.

4. Kartenverbinder nach einem der Ansprüche 1 bis 3, bei dem eine geneigte Führungsfläche am ersten Eingriffsteil (62) des zweiten Stabs (60) ausgebildet ist und das Zurückziehen des Eingriffsarms (53) nach hinten führt, wenn die Arretierung des ersten Stabs (50) gelöst wird.

5. Kartenverbinder nach einem der Ansprüche 1 bis 4, bei dem ein elastisches Arretierungselement (79) am Abdeckungselement (70) angeordnet ist und das Vorwärtsbewegen des zweiten Stabs (60) verhindert, wenn die Arretierung des ersten Stabs (50) gelöst wird.

## Revendications

1. Connecteur de carte (1), comprenant:
un boîtier (10) contenant des contacts (13);
un cadre (20) fixé sur ce boîtier (10) et guidant une carte (C), de sorte que la carte (C) peut être insérée ou retirée;
un bras pivotant (30) agencé sur le boîtier (10), de sorte que ce bras (30) peut pivoter, éjectant la carte (C) dans la direction d'éjection par pivotement; et
un mécanisme d'éjection (40) agencé sur le côté du cadre (20) et entraînant le pivotement du bras pivotant (30) lorsque la carte (C) doit être éjectée; dans lequel
le mécanisme d'éjection (40) comprend une première barre (50) comportant une partie opérationnelle (90) sur une extrémité et un bras d'engagement (53) sur l'autre extrémité, une deuxième barre (60) comportant une première partie d'engagement (62), pouvant s'engager dans le bras d'engagement (53) lorsque la carte (C) doit être éjectée, sur une extrémité, et une deuxième partie d'engagement (64), s'engageant dans le bras pivotant (30), sur l'autre extrémité, et un élément de couverture (70) supportant la première barre (50) et la deuxième barre (60) de sorte que ces barres (50, 60) peuvent se déplacer dans la direction allant de l'avant vers l'arrière;
la première barre (50) et la deuxième barre (60) étant agencées dans une seule rangée le long d'une paroi latérale du cadre (20), un moyen de pression (80) servant à presser la première barre (50) vers l'arrière, **caractérisé en ce que**
un butoir découpé et surélevé (29), comportant une surface effilée (29a) et assurant une action de verrouillage par engagement dans le bras d'engagement (53), empêchant ainsi une rétraction vers l'arrière de la première barre (50), est formé sur le cadre (20), le bras d'engagement (53) étant entraîné à se fléchir vers l'extérieur par rapport au cadre (20) par la surface effilée (29a) du butoir (29) lors du déverrouillage de la première barre (50), de sorte à permettre le passage de la première partie d'engagement (62) de la deuxième barre (60);
une partie effilée (78) entraînant le fléchissement vers le haut du bras d'engagement lors du dégagement du verrouillage de la première barre (50) est formée sur l'élément de couverture (70; et
une partie de guidage (63), comportant un bord latéral (63a) pouvant s'engager dans le bras d'engagement (53) entraînée à se fléchir vers le haut par la partie effilée (78) lors du dégagement du verrouillage de la première barre (50) est agencée sur la deuxième barre (60).

2. Connecteur de carte selon la revendication 1, dans lequel une deuxième partie effilée (77) est formée sur l'élément de couverture (70) et entraîne le déplacement vers l'intérieur du bras d'engagement, qui est entraîné à se fléchir vers l'extérieur par la surface effilée du butoir lors du dégagement du verrouillage de la première barre.

3. Connecteur de carte selon les revendications 1 ou 2, dans lequel une partie de support (56) est agencée sur la première barre (50) et rapproche par serrage la partie de guidage (63) et le bras d'engagement (53) lors du dégagement du verrouillage de la première barre (50).

4. Connecteur de carte selon l'une quelconque des revendications 1 à 3, dans lequel une surface de guidage inclinée est formée sur la première partie d'engagement (62) de la deuxième barre (60) et guide la rétraction vers l'arrière du bras d'engagement (53) lors du dégagement du verrouillage de la première barre (50).

5. Connecteur de carte selon l'une quelconque des revendications 1 à 4, dans lequel un élément de verrouillage élastique (79) est agencé sur l'élément de couverture (70) et empêche un déplacement vers l'avant de la deuxième barre (60) lors du dégagement du verrouillage de la première barre (50).
